# EUROPÄISCHE PATENTSCHRIFT

(11) **EP 4 297 925 B1**
(45) Veröffentlichungstag und Bekanntmachung des Hinweises auf die Patenterteilung: **12.03.2025**
(21) Anmeldenummer: 22700820.8
(22) Anmeldetag: 18.01.2022
(51) Int. Cl.: B23K 26/12, B23K 26/26, B23K 15/00

(54) **VERFAHREN ZUM VERSCHWEISSEN MIT EINER MOBILEN UNTERDRUCKKAMMER**
METHOD FOR WELDING USING A MOBILE VACUUM CHAMBER
PROCÉDÉ DE SOUDAGE FAISANT INTERVENIR UNE CHAMBRE DE DÉPRESSION MOBILE

(30) Priorität: 25.02.2021 DE 102021104512
(43) Veröffentlichungstag der Anmeldung: 03.01.2024
(73) Patentinhaber: Fachhochschule Aachen, 52066 Aachen (DE)
(72) Erfinder: GERHARDS, Benjamin, 52072 Aachen (DE); SCHLESER, Markus, 52379 Langerwehe (DE); LIBERT, Stefan, 52062 Aachen (DE)
(74) Vertreter: Cohausz Hannig Borkowski Wißgott
(86) Internationale Anmeldenummer: PCT/EP2022/050979
(87) Internationale Veröffentlichungsnummer: WO 2022/179767

(56) Entgegenhaltungen:
- GB-A- 2 568 696

## Beschreibung

Die Erfindung betrifft ein Verfahren zum Verschweißen von zwei Fügepartnern entlang eines zwischen diesen angeordneten Fügespaltes, wobei zum Schweißen ein Energiestrahl den Fügespalt durch eine mobile Unterdruckkammer hindurch beleuchtet, insbesondere über die gesamte Tiefe des Fügespaltes, die auf den Fügepartnern, insbesondere hierbei den Fügespalt bereichsweise überdeckend, entlang des Fügespaltes bewegt wird und in der ein lokaler Unterdruck erzeugt wird.

Unter einen Energiestrahl wird ein Strahl elektromagnetischer Strahlung oder ein Strahl von Teilchen, z.B. Elektronen verstanden, der geeignet ist am Auftreffort Energie auf die Fügepartner zu deponieren, um dort eine Verschweißung der Fügepartner zu bewirken. Vorzugsweise ist ein solcher Energiestrahl ein Laserstrahl oder ein Elektronenstrahl. Für ein solches Verfahren kann eine mobile Unterdruckkammer eingesetzt werden, die ein Kammergehäuse mit einem Unterdruckanschluß umfasst, das in Richtung zu der zu schweißenden Oberfläche der Fügepartner eine Öffnung aufweist, deren Öffnungsrand gedichtet auf die zu schweißende Fügepartneroberfläche auflegbar ist und die einen der Öffnung gegenüberliegenden Erzeugungsbereich oder Einkopplungsbereich für einen Energiestrahl, z.B. einen Laserstrahl aufweist. Dieser Einkopplungsbereich für einen Laserstrahl oder sonstigen elektromagnetischen Strahl kann vorzugsweise ein Fenster aufweisen, z.B. aus Glas oder aus einem sonstigen für den Strahl durchlässigen aber für Gas undurchlässigen Material. Sofern der Energiestrahl ein Teilchenstrahl ist, kann es auch vorgesehen sein, die Energie tragenden Teilchen in einem Erzeugungsbereich innerhalb der Unterdruckkammer zu erzeugen, insbesondere ausgehend davon in Richtung zur vorgenannten Öffnung zu beschleunigen.

Der Unterdruckanschluß ist über eine Leitung mit einer Pumpe verbunden, um aus der Unterdruckkammer Luft und/oder Schutzgas abzupumpen.

Verfahren und Unterdruckkammern dieser Art sind im Stand der Technik bekannt, z.B. aus der von derselben Anmelderin stammenden Publikation DE 10 2019 107 887 A1. Ferner ist aus der GB 2 568 696 ein Verfahren nach dem Oberbegriff des Anspruchs 1 bekannt.

Sie werden eingesetzt, um unter Unterdruckbedingungen Verschweißungen von Fügepartnern vorzunehmen. Dabei wird in der Unterdruckkammer ein Unterdruck gegenüber der von der Unterdruckkammer nicht überdeckten Umgebung erzeugt, so dass in der Unterdruckkammer die Verschweißung unter den Unterdruckbedingungen vorgenommen werden kann.

Mit dieser Methode können somit auch sehr große Bauteile, die nicht komplett in eine Unterdruckkammer passen, unter der Wirkung des Unterdruckes am Schweißort verschweißt werden, da der lokale Bereich der Unterdruckerzeugung den Schweißort umgibt und mit dem Schweißfortschritt entlang des Fügespaltes weiterbewegt wird.

Problematisch ist es beim Verschweißen von Fügepartnern mit großer Dicke bei einem Unterdruck-Schweißverfahren mit mobiler Unterdruckkammer, insbesondere bei Fügepartnern von mehr als 10 mm Dicke, dass die sich gegenüberliegenden Stirnflächen der Fügepartner, zwischen denen der Fügespalt ausgebildet wird, in einer möglichen Ausführungsart genauestens geschliffen werden müssen, damit die Fügepartner mit einem sogenannten technischen Nullspalt als Fügespalt aneinanderliegen, denn nur so kann genügend gut verhindert werden, dass Umgebungsluft durch den Fügespalt hindurch in die Bereiche unter der Unterdruckkammer gesogen wird.

Ein technischer Nullspalt ist weiterhin Voraussetzung, wenn keine Schweißzusatzstoffe in die Unterdruckkammer eingebracht werden können. Ein solcher Nullspalt ist aber bei Fügepartnern großer Dicke, insbesondere von mehr als 10 mm, aufwändig herzustellen.

Unter einem technischen Nullspalt wird dabei ein Fügespalt zwischen den Fügepartnern kleiner als 25 Mikrometer verstanden. Ersichtlich ist die Einhaltung einer solchen Bedingung besonders bei großen Dicken der Fügepartner schwer vorzunehmen, insbesondere aufgrund der unter Fertigungsbedingungen auftretenden Toleranzen.

Die eingangs genannte Publikation erschließt grundsätzlich auch das Schweißen ohne Nullspalt mit Schweißzusatzstoffen, die durch eine vorzugsweise gasdichte Durchführung in die Unterdruckkammer zugeführt werden, welche vom Energiestrahl, vorzugsweise einem Laserstrahl durchleuchtet ist. Die Erfindung wird vorzugsweise ebenso mit einer mobilen Unterdruckkammer durchgeführt, in welche solche Schweißzusatzstoffe zugeführt werden können, kann aber auch ohne Schweißzusatzstoff zur Anwendung kommen.

Ohne Nullspalt ergibt sich das Problem, dass große Leckageluftströme durch den Fügespalt auftreten, die gemäß der vorgenannten Publikation dadurch verhindert werden, dass der Fügespalt in allen Oberflächenbereichen vor dem Verschweißen provisorisch gasdicht geschlossen wird, bis auf einen Startbereich, auf den die mobile Unterdruckkammer aufgesetzt wird und durch den hindurch der Fügespalt in seinem inneren Volumen evakuiert wird. Diese Vorbereitungsmaßnahmen erweisen sich ebenfalls als sehr aufwändig, insbesondere hinsichtlich der Zeit, die zum Verschweißen insgesamt benötigt wird.

Es ist somit eine Aufgabe der Erfindung ein Verfahren zum Schweißen, vorzugsweise zum Laser-Schweißen von Fügepartnern mit einer mobilen Unterdruckkammer, bereitzustellen, welches die vorgenannten Nachteile überwindet, insbesondere mit denen auch vergleichsweise dicke Fügepartner ohne aufwändige Vorbereitungsmaßnahmen an den Fügepartnern verschweißt werden können.

Erfindungsgemäß wird diese Aufgabe dadurch gelöst, dass die vom Energiestrahl, vorzugsweise einem Laserstrahl durchleuchtete Unterdruckkammer eine erste Unterdruckkammer bildet, in der beim Schweißen ein Unterdruck mit einem ersten Druckniveau erzeugt wird und in einer an die erste Unterdruckkammer angrenzenden zweiten Unterdruckkammer, die beim Schweißen den Fügespalt bereichsweise überdeckt, ein Unterdruck mit einem zweiten Druckniveau erzeugt wird, wobei mit einem Druckregelsystem die Druckniveaus in beiden Unterdruckkammern aneinander angeglichen werden oder das erste Druckniveau über das zweite Druckniveau angehoben wird.

Vorzugsweise kann es vorgesehen sein, dass die zweite Unterdruckkammer direkt an die Kammerwand der ersten Unterdruckkammer angrenzt, insbesondere beide Unterdruckkammern eine gemeinsame Kammerwand haben.

Z.B. kann die zweite Unterdruckkammer in der Schweißrichtung der ersten Unterdruckkammer voreilend angeordnet sein, insbesondere hierbei nun den Teil des Fügespaltes überdecken, der in der Schweißrichtung vor der ersten Unterdruckkammer liegt. Die beiden Unterdruckkammern sind hierbei linear hintereinander angeordnet.

Die zweite Unterdruckkammer kann die erste Unterdruckkammer in einer vorzugsweise möglichen Ausführung zumindest bereichsweise, vorzugsweise vollständig umgeben, insbesondere betrachtet in einer Ebene in oder parallel zur Fügepartneroberfläche.

Z.B. kann die zweite Unterdruckkammer in der Umfangsrichtung um die erste Unterdruckkammer herum in mehrere, insbesondere wenigstens zwei Kammerbereiche unterteilt sein, wobei die Kammerbereiche untereinander verbunden sind. Alle Kammerbereiche bilden somit insgesamt die zweite Unterdruckkammer. Die Verbindungen zwischen den Kammerbereichen, vorzugsweise jeweils zwischen benachbarten Kammerbereichen, können durch Leitungen erfolgen, vorzugsweise die, insbesondere betrachtet im Schnitt quer zur Umfangsrichtung, einen Querschnitt aufweisen, der geringer ist, als der Querschnitt der verbundenen Kammerbereiche.

Hierbei ist beispielsweise eine Ausführung möglich, in welcher die zweite Unterdruckkammer einen ersten und einen zweiten Kammerbereich aufweist, zwischen denen die erste Unterdruckkammer angeordnet ist. Erster und zweiter Kammerbereich der zweiten Unterdruckkammer sind durch wenigstens eine Leitung fluidisch verbunden und weisen zumindest im Wesentlichen gleiches Druckniveau auf. Erster und zweiter Kammerbereich liegen vorzugsweise mit der ersten Unterdruckkammer auf einer Linie hintereinander, insbesondere auf einer Linie, welche den Fügespalt überdeckt. Vorzugsweise liegen der erste und zweite Kammerbereich der zweiten Unterdruckkammer und die erste Unterdruckkammer hinsichtlich ihrer jeweiligen auf der Fügepartneroberfläche liegenden Mittelpunkte auf dieser genannten Linie. Vorzugsweise können somit die beiden Kammerbereiche die erste Unterdruckkammer somit auf diametral gegenüberliegenden Seiten umgeben.

Es kann vorgesehen sein, dass der erste und der zweite Kammerbereich der zweiten Unterdruckkammer die einzigen Kammerbereiche sind oder aber auch, dass zwischen erstem und zweiten Kammerbereich der zweiten Unterdruckkammer weitere Kammerbereiche dieser zweiten Unterdruckkammer angeordnet sind.

Es kann auch vorgesehen sein, dass die zweite Unterdruckkammer die erste Unterdruckkammer vollständig umgibt, vorzugsweise mit zumindest im Wesentlichen gleichbleibendem Querschnitt, insbesondere betrachtet in der Ebene der Fügelpartneroberfläche.ln dieser Ausbildung ist die zweite Unterdruckkammer vorzugsweise ringförmig, wobei die ringförmige Innenwandung der zweiten Unterdruckkammer gleichzeitig die ringförmige Außenwand der ersten Unterdruckkammer bilden kann.

Das erfindungsgemäß Verfahren erschließt unabhängig von der konkreten Kammerausbildung, dass durch die Regelung entweder der Unterdruck in beiden Unterdruckkammern gleich ist oder aber, dass der Druck in der zweiten Unterdruckkammer geringer ist, als in der ersten Unterdruckkammer.

Ohne eine Druckdifferenz zwischen den Kammern findet somit kein Gasstrom zwischen den Unterdruckkammern über den Fügespalt hinweg statt. Dies erzeugt ein besonders ruhiges Schmelzebad.

Ist hingegen eine Druckdifferenz vorhanden, so ist diese erfinderungsgemäß so eingeregelt, dass der Druck in der ersten, insbesondere inneren, Unterdruckkammer, in welcher der Schweißprozess stattfindet, größer ist als in der zweiten Unterdruckkammer. Aufgrund einer Zuführung von Schutzgas durch wenigstens einen Schutzgasanschluß in die erste Unterdruckkammer kann allenfalls das in die erste Unterdruckkammer einströmende Schutzgas von der ersten Unterdruckkammer in die zweite Unterdruckkammer durch den Fügespalt hindurch überströmen. Hingegen ist ein Strömen von sauerstoffhaltiger Umgebungsluft aus der zweiten Unterdruckkammer in die erste Unterdruckkammer aufgrund der Druckverhältnisse nicht möglich.

Es wird daher mit der Erfindung sichergestellt, dass das in der ersten Unterdruckkammer erstellte Schmelzebad immer in einer Schutzgasatmosphäre unter Unterdruckbedingungen vorliegt.

Durch das erfindungsgemäße Verfahren ergibt sich somit keine Notwendigkeit mehr, die Fügepartner für die Ausbildung eines technischen Nullspaltes vorzubereiten.

Insbesondere ist sogar eine genügend große Ausbildung eines Fügespaltes zwischen den Fügepartnern vorteilhaft, damit, zumindest wenn der Druck in der zweiten Unterdruckkammer geringer ist als in der ersten, der sich einstellende Druckausgleich einen Schutzgasstrom in Richtung zur zweiten Unterdruckkammer durch den Fügespalt hindurch erzeugen kann.

Vorzugsweise kann es demnach vorgesehen sein, den Fügespalt größer als einen technischen Nullspalt auszubilden. Ein benötigter oder gewünschter Fügespalt kann vor Schweißbeginn eingestellt und die Fügepartner fixiert werden, z.B. durch schweißtechnisches Anheften aneinander.

Bevorzugt ist es somit, dass gemäß der Erfindung der Fügespalt zwischen den Fügepartnern gebildet wird durch Aneinanderlegen der Fügepartner, wobei der Abstand der sich gegenüberliegenden Fügepartner außerhalb der Toleranzen eines technischen Nullspaltes liegt, insbesondere die Fügepartner im I-Stoß mit nicht geschliffenen Kanten zueinander angeordnet sind. Somit können gemäß der Erfindung die Vorbereitungsmaßnahmen zur Erzeugung eines technischen Nullspaltes entfallen.

Insbesondere können somit die Fügepartner mit der Rauheit ihrer den Fügespalt definierenden Flächen zur Bildung eines Fügespaltes aneinandergelegt werden, die durch ein übliches Verfahren zum Trennen / Schneiden von Material bereitgestellt wird, wie z.B. Wasserstrahlschneiden, Laserstrahlschneiden, Plasmaschneiden, Sägen, Brennen etc.

Besonders bevorzugt können somit zum Stand der Technik deutlich verringertem Aufwand Fügepartner mit einer Dicke größer als 10 mm, bevorzugt größer als 20 mm, weiter bevorzugt größer als 30 mm, weiter bevorzugt größer als 40 mm, weiter bevorzugt größer als 50 mm, weiter bevorzugt größer als 60mm, noch weiter bevorzugt größer als 70 mm, noch mehr bevorzugt größer als 80 mm, vorzugsweise größer als 90mm und weiter bevorzugt größer als 100mm oder noch mehr miteinander verschweißt werden. Weiter bevorzugt kann dies in einem einzigen Schweißdurchgang erfolgen.

Insbesondere bei herrschender Druckgleichheit in den beiden Unterdruckkammern kann aber auch das Schweißen erfolgen, wenn die Fügepartner mit technischem Nullspalt zueinander positioniert sind.

Vorzugsweise kann es die Erfindung vorsehen, dass die Differenz zwischen den Druckniveaus beider Unterdruckkammern innerhalb eines vorbestimmten Regelungsbereiches gehalten wird, insbesondere innerhalb von 1 bis 30 mbar, vorzugsweise 10 bis 20 mbar.

Hierdurch ergibt sich der Vorteil, dass durch die Druckdifferenz zwar ein Schutzgasstrom, insbesondere durch den noch nicht geschweißten Fügespaltbereich, der dem Laserstrahl in der Schweißrichtung voreilt, von der ersten Unterdruckkammer in die zweite Unterdruckkammer erfolgt, der Volumenstrom ist aber derart gering, dass das Schmelzbad am Schweißort hierdurch nicht negativ beeinflusst ist.

Die Erfindung kann hier vorsehen, dass das Regelsystem so eingerichtet ist, dass unter Berücksichtigung einer system gegebenen Regelungenauigkeit jederzeit das Druckniveau in der zweiten Unterdruckkammer kleiner ist als in der ersten Unterdruckkammer, oder allenfalls gleich wird. Dies kann z.B. dadurch erfolgen, dass der Sollwert der Druckdifferenz größer gewählt wird als die maximal mögliche Regelbreite.

Die Erfindung kann es vorzugsweise vorsehen, dass zur Einstellung der relativen Lage der Druckniveaus zueinander im Rahmen der Regelung das erste Druckniveau durch technische Regelmaßnahmen geändert wird, insbesondere in Abhängigkeit des in beiden Unterdruckkammern meßtechnisch erfassten Ist-Unterdruckes. Zur Erfassung von Druckmesswerten könne beide Unterdruckkammer jeweils wenigstens einen Drucksensor umfassen, dessen Meßwert der Regelung zur Verfügung gestellt wird.

Die Regelung kann z.B. erfolgen durch Änderung des Volumenstroms des in die erste Unterdruckkammer zugeführten Schutzgases und/oder durch Änderung des Volumenstroms des aus der ersten Unterdruckkammer abgepumpten Gases. Insbesondere Schutzgases. Jeweilige Änderungen können z.B. durch Ansteuerung von wenigstens einem Ventil erfolgen, also insbesondere eines Ventiles in der wenigstens einen Schutzgaszufuhrleitung, die in die erste Unterdruckkammer mündet und/oder durch Ansteuerung eines Ventil in der Abpumpleitung, über welche die erste Unterdruckkammer mit einer das Gas, Insbesondere das Schutzgas abpumpenden Pumpe verbunden ist.

Besonders vorteilhaft kann es dabei vorgesehen sein, dass eine Regelung ohne Änderung des Pumpenstranges erfolgen kann, mit dem die zweite Unterdruckkammer evakuiert wird. Der Unterdruck in der zweiten Unterdruckkammer kann also beispielsweise selbst ungeregelt sein, insbesondere selbst dann, wenn er variierend ist, z.B. aufgrund einer Variation der Fügespaltbreite entlang des Schweißweges.

Es besteht allerdings ebenso die Möglichkeit den Unterdruck in der zweiten Unterdruckkammer auf einen bestimmten Sollwert zu regeln und sodann hierfür den Pumpenstrang zu ändern, z.B. durch Änderung wenigstens eines Ventilquerschnitts im Pumpenstrang und/oder der Pumpenleistung.

Es kann allgemein vorgesehen sein, dass der Sollwert für die Regelung des Druckes in der ersten Unterdruckkammer direkt durch den Ist-Unterdruck in der zweiten Unterdruckkammer gegeben ist oder der Sollwert wird in Abhängigkeit von dem Ist-Unterdruck in der zweiten Unterdruckkammer gebildet, z.B. durch Addition des gewünschten Differenzdruckwertes, der zwischen den Kammern vorliegen soll. Wie zuvor genannt, kann dieser Ist-Unterdruckwert in der zweiten Unterdruckkammer selbst einer Regelung unterliegen oder ungeregelt sein.

Weiterhin bevorzugt kann vorgesehen sein, dass in Abhängigkeit des ersten und/oder zweiten Druckniveaus, also des Druckes in der ersten und/oder zweiten Unterdruckkammer, die Schweißparameter des Energiestrahls, vorzugsweise des Laserstrahles oder auch eines Elektronenstrahl, insbesondere die Strahlleistung geändert werden. Eine Variation des Fügespaltes entlang des Schweißweges, welche sich auf das jeweilige Druckniveau auswirkt, kann so kompensiert werden.

Zu den Schweißparametern gehören weiterhin vorzugsweise die Schweißgeschwindigkeit und/oder die Strahlleistung und/oder die Pendelamplitude und/oder -frequenz und/oder der Auftreffpunkt eines vorzugsweise zugeführten Schweißdrahtes relativ zum Strahl. Dieser wird vorzugsweise so gewählt, dass etwa die Hälfte des Drahtes in das Schmelzbad eintaucht, während die andere Hälfte des Drahtes direkt in den Energiestrahl, vorzugsweise Laserstrahl gefördert wird.

Es wird sodann zwar durch die Regelung die gewünschte Druckdifferenz eingehalten, das Absolutdruckniveau beider Unterdruckkammern kann hingegen entlang des Schweißweges variieren.

Die Erfindung kann in vorteilhafter Weiterbildung vorsehen, dass vor dem Beginn der Verschweißung der Fügepartner der Fügespalt an der wurzelseitigen Oberfläche der Fügepartner verschlossen wird. So kann verhindert werden, dass Umgebungsluft in Dickenrichtung der Fügepartner durch den Fügespalt in die erste Unterdruckkammer gelangt.

Noch weiter bevorzugt kann vor dem Beginn der Verschweißung der Fügepartner in allen Oberflächenbereichen der Fügepartner, in denen der Fügespalt zur Umgebung offen ist, mit Ausnahme der Oberflächenbereiche auf der zu schweißenden Seite der Fügespalt verschlossen werden.

Bei gestoßenen Fügepartnern, bei denen der Fügespalt am Fügespaltanfang und - ende ebenfalls in den stirnseitigen Oberflächen offen ist, kann die Erfindung vorsehen, auch an diesen stirnseitigen Oberflächen den Fügespalt zu schließen. Dafür können z.B. vor und/oder nach dem Fügespalt angeordnete Einlauf- und/oder Auslaufbleche verwendet werden, die gedichtet stirnseitig an den Fügepartnern befestigt werden, z.B. ebenso durch Verschweißung.

Erfindungsgemäß kann es bevorzugt vorgesehen sein, dass der Verschluß des Fügespaltes gegenüber der Umgebung auf der Wurzelseite während des Schweißprozesses lokal wieder zerstört wird, insbesondere durch die erzeugte Schweißnaht ersetzt wird. Es können daher für das bevorzugt gasdichte Verschließen jegliche Maßnahmen und Dichtmittel eingesetzt werden, um den Verschluß zu bewirken, da das zum Verschließen eingesetzte Dichtmittel unter der Wirkung des Energiestrahls, vorzugsweise des Lasers auf der Wurzelseite auch verdampfen kann. Bevorzugt ist das Dichtmittel zum Verschließen des Fügespaltes so gewählt, dass es auch Teil der Schweißnaht werden kann.

So sieht eine besonders bevorzugte Vorgehensweise vor, dass das wenigstens eine Dichtmittel durch eine Schweißnaht ausgebildet wird, die spaltüberbrückend auf den Fügepartner-Oberflächen angeordnet wird, insbesondere zumindest wurzelseitig. Eine solche Schweißnaht kann z.B. mittels einer Lichtbogenverschweißung durchgeführt werden.

Sofern die Fügepartner mit technischem Nullspalt angeordnet sind, kann die Lichtbogenverschweißung z.B. ohne Schweißzusatzstoff erfolgen, also nur durch die Wirkung des reinen Lichtbogens eine Oberflächenaufschmelzung erzeugt werden, die den Nullspalt schließt. Bei einer Anordnung ohne technischen Nullspalt, was gerade den Vorteil des Verfahrens ausmacht, kann das Lichtbogenverschweißen auch unter Zuführung eines Schweißzusatzes durchgeführt werden. Der Schweißzusatzstoff kann bevorzugt durch eine solche Metall-Legierung gebildet werden, die in der späteren Schweißnaht verbleiben kann, die unter der Unterdruckkammer erzeugt wird. Insbesondere kann es derselbe Zusatzstoff sein, der auch bei einer möglichen Zuführung unter die erste Unterdruckkammer verwendet wird.

Alternativ kann die Erfindung vorsehen, zum Verschließen des Fügespaltes wurzelseitig, ggfs. auch stirnseitig am Einlauf und/oder Auslauf einen Metall-Blechstreifen oder eine Metallfolie spaltüberbrückend auf den Fügepartner-Oberflächen anzuordnen, insbesondere mit den Oberflächen zu verkleben oder zu verlöten oder zu verschweißen.

Weiter alternativ kann auch ein Klebeband spaltüberbrückend auf den Fügepartner-Oberflächen angeordnet, insbesondere aufgeklebt werden. Einzige Voraussetzung für das Klebeband ist dessen genügende Gasdichtheit. Z.B, kann diese durch eine gasdichte Kaschierung des Klebebandes gegeben sein, z.B. durch eine Metallkaschierung oder Kunststofffolienkaschierung.

Wie eingangs erwähnt, kann mit der Erfindung auch unter der Nullspalt-Bedingung das Schweißen der Fügepartner erfolgen. Es ist jedoch ein Vorteil der Erfindung, dass eine solche Bedingung keine Voraussetzung für die Erfindung ist.

Es kann vorgesehen sein, dass die Fügepartner beim Schweißen mit einem Fügespalt aneinander liegen, der nicht die Bedingungen an einen technischen Nullspalt erfüllt, insbesondere also der Fügespalt zumindest lokal, vorzugsweise überall entlang des Fügespaltes, breiter als 25 Mikrometer ist. Praktisch gesehen ermöglicht sogar ein solcher Fügespalt bei Ausführung der Erfindung mit einem Differenzdruck zwischen den Kammern ein besseres Überströmen des Schutzgases von der ersten zur zweiten Unterdruckkammer.

Die Erfindung kann vorsehen, den Fügespalt zumindest lokal, vorzugsweise überall entlang des Fügespaltes, größer als 25 Mikrometer, weiter bevorzugt größer als 100 Mikrometer, weiter bevorzugt größer als 1000 Mikrometer, weiter bevorzugt größer als 2500 Mikrometer, noch weiter bevorzugt größer als 5000 Mikrometer einzustellen.

Die Erfindung kann bei allen möglichen Ausführungen, insbesondere bei einem Fügespalt größer als ein technischer Nullspalt vorsehen, dass der Energiestrahl, vorzugsweise ein Laser taumelnd/pendelnd oder kreisend über den Fügespalt beim Schweißen geführt wird, insbesondere also immer wieder den Fügespalt kreuzend.

Die Erfindung kann bevorzugt vorsehen, bei Fügespaltbreiten kleiner gleich 500 Mikrometer / 0,5 mm die Verschweißung ohne Zusatzwerkstoff vorzunehmen. Über 500 Mikrometer bzw. 0,5 mm Fügespalt wird bevorzugt mit einem Zusatzwerkstoff verschweißt, der durch einen Schweißdraht zugeführt werden kann.

Unabhängig von vorgenanntem Grenzkriterium kann die Erfindung in einer bevorzugten Weiterbildung vorsehen, dass durch eine unterdruckdichte Durchführung in der Wandung der ersten Unterdruckkammer ein Schweißdraht in die Schmelzbadzone des Energiestrahls / Laserstrahls und/oder in den Energiestrahl / Laserstrahl zugeführt wird. So kann mit der Erfindung auch ein Schweißzusatzstoff des Schweißdrahts in der Schmelzezone verwendet werden.

Die Erfindung kann dafür vorsehen, dass in der Kammerwandung der ersten Unterdruckkammer eine unterdruckdichte Durchführung für einen Schweißdraht angeordnet ist. Eine solche Durchführung kann z.B. eine Führungshülse aufweisen, mit welcher ein Schweißdraht auf einer Linie führbar ist, welche die Achse des Energiestrahls, insbesondere die optische Achse des Laserstrahles schneidet, bevorzugt in oder unter der Öffnungsebene / Fügepartneroberfläche.

Die Erfindung kann es auch vorsehen, vorzugsweise bei elektromagnetischen Energiestrahlen, insbesondere Laserstrahlen, den Energiestrahl zumindest bereichsweise in einer Schutzkammer, insbesondere einer innerhalb der ersten Unterdruckkammer angeordneten Schutzkammer zu führen, die den Energiestrahl umgibt und die vom Schutzgas durchströmt wird. Der elektromagnetische Energiestrahl kann z.B. durch ein optisches Einkopplungselement, z.B. ein für den Energiestrahl durchlässiges Fenster oder eine durchlässige Linse in die Schutzkammer eingekoppelt werden, vorzugsweise die Schutzkammer durch eine dem Einkopplungselement in Strahlrichtung gegenüberliegende Öffnung zur ersten Unterdruckkammer verlassen. Die Öffnung dient somit auch dem Durchtritt des Energiestrahles aus der Schutzkammer in die erste Unterdruckkammer, insbesondere wonach der Energiestrahl die erste Unterdruckkammer durchquert in Richtung zu den Fügepartnern.

Es kann vorgesehen sein, dass in die Schutzkammer eingeleitetes Schutzgas einen Schutzgasstrom bildet, der zumindest teilweise, ggfs. vollständig durch die Öffnung in die erste Unterdruckkammer übergeht. Insbesondere ist dafür ein Schutzgaseinlass näher zum Einkoppelelement angeordnet als zu der zur ersten Unterdruckkkammer weisenden Öffnung der Schutzklammer.

Vorzugsweise verläuft zumindest der durch die Öffnung gehende Schutzgasstrom wenigstens bereichsweise parallel und in Richtung zum Energiestrahl. Es kann auch vorgesehen sein, dass ein Schutzgasstrom in der Schutzkammer erzeugt wird, der den Energiestrahl kreuzt. Hierfür kann z.B. eine Ausströmdüse für Schutzgas so angeordnet sein, dass diese einen Schutzgasstrahl erzeugt, der den Energiestrahl kreuzt. Gegenüberliegend zur Ausströmdüse kann bevorzugt eine Absaugöffnung vorgesehen sein, um zumindest einen Teil des Schutzgases direkt aus der Schutzkammer abzusaugen, wohingegen ein anderer Teil des Schutzgases nach Durchtritt durch die Öffnung zur ersten Unterdruckkammer aus dieser abgesaugt wird, insbesondere dieser durch die Öffnung durchtretende Schutzgasanteil die Druckregelung in der ersten Unterdruckkammer bewirkt.

Durch den Schutzgasstrom in der Schutzkammer kann das Einkopplungselement vor Partikeln geschützt werden, die aus der ersten Unterdruckkammer, insbesondere vom Ort des Schmelzebades in dessen Richtung fliegen.

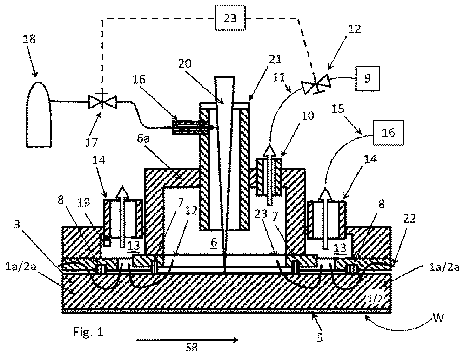

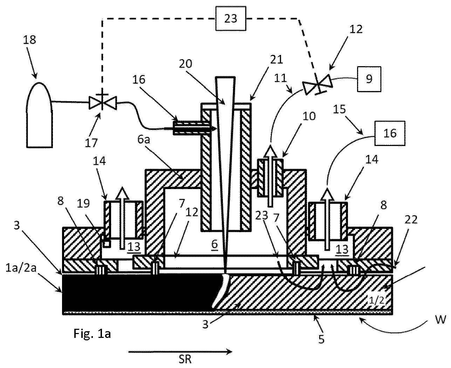

Ausführungen der Erfindung werden nachfolgend anhand der Figuren 1 und 1a erläutert.

Die Figuren zeigen die Anwendung des Verfahrens beim Schweißen zweier planer Blechstreifen als Fügepartner 1 und 2. Zwischen diesen ist ein Fügespalt 3 angeordnet, insbesondere der größer ist, als es die Bedingungen für einen technischen Nullspalt erfordern würden. Die Figuren stellen eine Schnittansicht dar in der vertikalen Ebene, in welcher der Fügespalt 3 liegt, also mit Blick in den Fügespalt. Die Schweißrichtung ist durch den Pfeil SR gekennzeichnet.

Der Fügespalt kann hier vorzugsweise zumindest an der Wurzel W zur Umgebung hin verschlossen worden sein.

Dies erfolgt z.B. mit einem Dichtmittel 5, dass spaltüberbrückend auf die unterseitigen / wurzelseitigen Oberflächen der Fügepartner 1 und 2 appliziert wird, z.B. eine Schweißnaht oder ein gasdichtes Klebeband. Eine Dichtung an den einlaufseitigen und/oder auslaufseitigen Stirnflächen 1a, 2a und 1b, 2b kann ebenso vorgesehen sein, ist hier aber in diesem Ausschnitt nicht dargestellt.

Die Schweißvorrichtung weist eine erste Unterdruckkammer 6 auf, die im Wesentlichen durch einen topf- oder glockenförmig Kammerwand 6a ausgebildet ist. Diese wird gedichtet auf die oberseitige Oberfläche der Fügepartner 1, 2 aufgesetzt, so dass die erste Unterdruckkammer 6 den auf der zu schweißenden Seite insgesamt offenen Fügespalt 3 bereichsweise überdeckt. Der zur Oberfläche der Fügepartner 1,2 weisende ring- oder rahmenförmige Kammerrand weist hier eine Dichtung 7 auf, so dass Gas nur durch den Fügespalt 3 in die ersten Unterdruckkammer 6 einströmen oder aus dieser ausströmen könnte. Die erste Unterdruckkammer 6 wird mit einer schematisch visualisierten Pumpe 9 durch den Unterdruckanschluß 10 über die Leitung 11 und das Ventil 12 evakuiert, so dass in der ersten Unterdruckkammer 6 ein erstes Druckniveau vorherrscht.

Die Schweißvorrichtung weist eine weitere zweite Unterdruckkammer 13 auf, die zumindest in Schweißrichtung SR voreilend, insbesondere hier die erste Unterdruckkammer 6 ringförmig umgebend, direkt an die Kammerwand 6a der ersten Unterdruckkammer 6 anschließt. Die zweite Unterdruckkammer 13 hat mit der ersten Unterdruckkammer 6 eine gemeinsame, insbesondere hier ringförmige, Kammerwand 6a. Die zweite Unterdruckkammer 13 liegt mit deren ringförmigen Kammerwänden über die Dichtungen 7 und 8 auf der Oberfläche der Fügepartner 1, 2 auf. ^

Allgemein sind vorzugsweise bei allen möglichen, auch hier nicht gezeigten Ausführungen die zu den Oberflächen der Fügepartner weisenden Stirnflächen der Kammerwandungen von erster und zweiter Unterdruckkammer über Dichtungselemente dicht auf den Fügepartneroberflächen aufliegend.

Durch Abpumpen der Luft aus der zweiten Unterdruckkammer 13 durch den Unterdruckanschluß 14 über die Leitung 15 mit der Pumpe 16 wird in der zweiten Unterdruckkammer 13 ein zweites Druckniveau erreichet. Dieses zweite Druckniveau ist erfindungsgemäß kleiner als das erste Druckniveau in der ersten Unterdruckkammer 6 oder genau gleich zu diesem.

Erzielt wird dies durch eine Regelung des Druckniveaus in der ersten Unterdruckkammer 6, nämlich durch eine Variation des Abpumpquerschnittes in der Leitung 11 mittels Verstellung des Ventiles 12 und/oder durch eine Variation des Volumenstromes von Schutzgas mit einem Ventil 17 oder Druckminderer 17 aus einem Gasvorrat 18, das über den Schutzgasanschluß 16 in die erste Unterdruckkammer 6 einströmt. Eine Regelung 23 kann die Ventile 12, 17 steuern, z.B. in Abhängigkeit des gemessenen Druckes in der zweiten Unterdruckkammer 13.

Das zweite Druckniveau kann ungeregelt oder auch geregelt sein.

Für die Regelung des ersten Druckniveaus kann der Ist-Druck in der zweiten Unterdruckkammer 13 mit einem Drucksensor 19 erfasst werden und hieraus der Sollwert für die Regelung des ersten Druckniveaus gebildet werden.

Die Erfindung bewirkt, dass in einer ersten möglichen Ausführung bei eingeregelter Druckgleichheit in beiden Unterdruckkammern 6, 13 keinerlei Gasstrom im Fügespalt 3 vorliegt, wenngleich aus der Umgebung ein Luftstrom 22 in die zweite Unterdruckkammer 13 eintritt.

In einer zweiten Ausführung kann bei einem eingeregelten Differenzdruck zwischen den Unterdruckkammern 6, 13 aufgrund des höheren Druckniveaus in der ersten Unterdruckkammer 6 erreicht werden, dass Schutzgas aus der ersten Unterdruckkammer 6 über den Fügespalt 3 über einen Schutzgasstrom 23 im noch nicht verschweißen Bereich in die zweite Unterdruckkammer 13 überströmt, wobei Umgebungsluft nur über den Luftstrom 22 und nur in die zweite Unterdruckkammer 13 gelangt.

So wird in beiden Fällen vermieden, dass Umgebungsluft in die Schweißzone innerhalb der ersten Unterdruckkammer 6 gelangt, die von einem Laserstrahl 20 erzeugt wird, der durch ein Eintrittsfenster 21 in die erste Unterdruckkammer 6 eintritt und die Fügepartner 1,2 im Fügespaltbereich auf der zu schweißenden Seite beleuchtet.

Die Figuren zeigen auch eine Ausbildung, bei welcher der Laserstrahl 20 in Strahlrichtung von einem Rohr umgeben ist, welches eine Schutzkammer bildet. Strahleingangsseitig ist das Rohr mit dem genannten Eintrittsfenster 21 versehen, durch welches der Laserstrahl 20 hindurchtritt. Strahlausgangsseitig mündet das Rohr über eine Öffnung in die erste Unterdruckkammer 6, ist mit dieser also strömungstechnisch verbunden und damit auch Teil der ersten Unterdruckkammer 6.

Näher zur Eintrittsfenster 21 als zur Öffnung ist der Schutzgaseintritt in das Rohr / in die Schutzkammer vorgesehen, so dass sich eine gerichtete Schutzgasströmung ergibt, die in Strahlrichtung des Laserstrahles 20 und paralllel zu dieser durch das Rohr ergibt. Partikel, die vom Schmelzebad in Richtung zum Entrittsfenster fliegen, können dieses somit nicht verschmutzen, da sie vom Schutzgasstrom gehindert werden, das Eintrittsfenster zu erreichen.

Die Figur 1a unterscheidet sich von der Figur 1 nur dadurch, dass die Situation bei einem bestehenden Schweißfortschritt gezeigt ist, in der bzgl. der Schweißrichtung der hinter dem Laserstrahl 20 liegende Bereich des Fügespaltes 3 bereits durch Verschweißung geschlossen ist.

Zwischen den beiden Unterdruckkammern 6 und 13 kann somit Gas nur noch in einem vor dem Laserstrahl 20 liegenden Bereich des Fügespaltes 3 überströmen. Aus diesem Grund ist es auch möglich eine zweite Unterdruckkammer nur in Schweißrichtung vor der ersten Unterdruckkammer anzuordnen, zumindest, wenn der Schweißprozess auf einem Einlaufblech begonnen wird, so dass der Beginn des Fügespaltes unter der ersten Unterdruckkammer und in Schweißrichtung SR vor dem Laserstrahl 20 liegt.

## Patentansprüche

1. Verfahren zum Verschweißen von zwei Fügepartnern (1, 2) entlang eines zwischen diesen angeordneten Fügespaltes (3), wobei zum Schweißen ein Energiestrahl (20) den Fügespalt (3) durch eine mobile Unterdruckkammer (6) hindurch beleuchtet, insbesondere über die gesamte Tiefe des Fügespaltes (3), die auf der zu schweißenden Seite auf den Fügepartnern (1,2) entlang des Fügespaltes (3) bewegt wird und in der ein Unterdruck erzeugt wird, wobei
a. die vom Energiestrahl (20) durchleuchtete Unterdruckkammer (6) eine erste Unterdruckkammer (6) bildet, in der beim Schweißen ein Unterdruck mit einem ersten Druckniveau erzeugt wird, und
b. in einer an die erste Unterdruckkammer (6), insbesondere direkt an deren Kammerwand (6a), vorzugsweise die erste Unterdruckkammer (6) zumindest bereichsweise, weiter bevorzugt vollständig umgebend, angrenzenden zweiten Unterdruckkammer (13), die beim Schweißen den Fügespalt (3) bereichsweise überdeckt, ein Unterdruck mit einem zweiten Druckniveau erzeugt wird, und **dadurch gekennzeichnet, dass**
c. mit einem Druckregelsystem (23) die Druckniveaus in beiden Unterdruckkammern (6, 13) aneinander angeglichen werden oder das erste Druckniveau über das zweite Druckniveau angehoben wird.

2. Verfahren nach Anspruch 1, **dadurch gekennzeichnet, dass** die Differenz zwischen den Druckniveaus innerhalb eines vorbestimmten Regelungsbereiches gehalten wird, insbesondere innerhalb von 1 bis 30 mbar, vorzugsweise 10 bis 20 mbar.

3. Verfahren nach einem der vorherigen Ansprüche, **dadurch gekennzeichnet, dass** zur Einstellung der relativen Lage der Druckniveaus zueinander das erste Druckniveau durch technische Regelmaßnahmen geändert wird, vorzugsweise durch Änderung des Volumenstroms des in die erste Unterdruckkammer (6) zugeführten Schutzgases und/oder durch Änderung des Volumenstroms des aus der ersten Unterdruckkammer (6) abgepumpten Gases, vorzugsweise mittels wenigstens eines verstellbaren Ventils (12, 17), insbesondere ohne Änderung des Pumpenstranges (15, 16) mit dem die zweite Unterdruckkammer (13) evakuiert wird.

4. Verfahren nach einem der vorherigen Ansprüche, **dadurch gekennzeichnet, dass** in Abhängigkeit des ersten und/oder zweiten Druckniveaus die Schweißparameter des Energiestrahles (20), insbesondere die Strahlleistung geändert werden.

5. Verfahren nach einem der vorherigen Ansprüche, **dadurch gekennzeichnet, dass** vor dem Beginn der Verschweißung der Fügepartner (1, 2) der Fügespalt (3) an der wurzelseitigen Oberfläche (W) der Fügepartner (1, 2) verschlossen wird.

6. Verfahren nach einem der vorherigen Ansprüche, **dadurch gekennzeichnet, dass** vor dem Beginn der Verschweißung der Fügepartner in allen Oberflächenbereichen der Fügepartner (1, 2), in denen der Fügespalt (3) zur Umgebung offen ist, mit Ausnahme der Oberflächenbereiche auf der zu schweißenden Seite der Fügespalt (3) verschlossen wird.

7. Verfahren nach Anspruch 5 oder 6, **dadurch gekennzeichnet, dass** zum Verschließen des Fügespaltes (3) auf die wurzelseitige Oberfläche (W) der Fügepartner (1, 2), insbesondere sofern vorhanden auch auf die ein- und/oder auslaufseitige Oberfläche (1a, 2a, 1b, 2b) der Fügepartner (1, 2) wenigstens ein den Fügespalt (3) überbrückendes Dichtmittel (5) appliziert wird, bevorzugt wobei die wurzelseitige Oberfläche (W) zuerst verschlossen wird.

8. Verfahren nach Anspruch 7, **dadurch gekennzeichnet, dass** als das wenigstens eine Dichtmittel (5)
a. wenigstens eine Schweißnaht (5) spaltüberbrückend auf den Fügepartner-Oberflächen angeordnet wird, insbesondere mittels einer Lichtbogenverschweißung, bevorzugt unter Zuführung eines Schweißzusatzes, und/oder
b. ein Metall-Blechstreifen (5) oder eine Metallfolie (5) spaltüberbrückend auf den Fügepartner-Oberflächen angeordnet wird, insbesondere mit den Oberflächen verklebt, verlötet oder verschweißt wird, und/oder
c. ein Klebeband (5) spaltüberbrückend auf den Fügepartner-Oberflächen angeordnet, insbesondere aufgeklebt wird.

9. Verfahren nach einem der vorherigen Ansprüche, **dadurch gekennzeichnet, dass** der Fügespalt (3) zwischen den Fügepartnern (1, 2) gebildet wird durch Aneinanderlegen der Fügepartner (1, 2), wobei der Abstand der sich gegenüberliegenden Fügepartner (1, 2) außerhalb der Toleranzen eines technischen Nullspaltes liegt, insbesondere die Fügepartner (1, 2) im I-Stoß mit nicht geschliffenen, vorzugsweise Schnittrauheit aufweisenden Kanten/Stirnflächen zueinander angeordnet sind.

10. Verfahren nach einem der vorherigen Ansprüche, **dadurch gekennzeichnet, dass** Fügepartner (1, 2) mit einer Dicke größer als 10 mm, bevorzugt größer als 20 mm, weiter bevorzugt größer als 30 mm, weiter bevorzugt größer als 40mm, weiter bevorzugt größer als 50 mm miteinander verschweißt werden, insbesondere in einem einzigen Schweißdurchgang.

## Claims

1. Method for welding two parts to be joined (1, 2) along a joining gap (3) located between them, wherein, for the welding, an energy beam (20) illuminates the joining gap (3), in particular over the entire depth of the joining gap (3), through a mobile negative-pressure chamber (6) which is moved on the side to be welded on the parts to be joined (1, 2) along the joining gap (3) and in which a negative pressure is generated, wherein
a. the negative-pressure chamber (6) illuminated by the energy beam (20) forms a first negative-pressure chamber (6) in which during welding a negative pressure with a first pressure level is generated, and
b. in a second negative-pressure chamber (13) which adjoins the first negative-pressure chamber (6), in particular directly adjoins the chamber wall (6a) thereof, preferably so as to at least regionally, further preferably completely, surround the first negative-pressure chamber (6), and which during welding regionally covers the joining gap (3), a negative pressure with a second pressure level is generated, and **characterized in that**
c. a pressure regulating system (23) is used to align the pressure levels in the two negative-pressure chambers (6, 13) with one another or to raise the first pressure level above the second pressure level.

2. Method according to Claim 1, **characterized in that** the difference between the pressure levels is kept within a predetermined regulating range, in particular within from 1 to 30 mbar, preferably 10 to 20 mbar.

3. Method according to either of the preceding claims, **characterized in that**, for setting the position of the pressure levels relative to one another, the first pressure level is changed by technical regulating measures, preferably by changing the volume flow of the protective gas fed into the first negative-pressure chamber (6) and/or by changing the volume flow of the gas pumped out of the first negative-pressure chamber (6), preferably by means of at least one adjustable valve (12, 17), in particular without changing the pump line (15, 16) with which the second negative-pressure chamber (13) is evacuated.

4. Method according to one of the preceding claims, **characterized in that**, in dependence on the first and/or second pressure level, the welding parameters of the energy beam (20), in particular the beam power, are changed.

5. Method according to one of the preceding claims, **characterized in that**, before the start of welding of the parts to be joined (1, 2), the joining gap (3) is closed on the root-side surface (W) of the parts to be joined (1, 2).

6. Method according to one of the preceding claims, **characterized in that**, before the start of welding of the parts to be joined, in all surface regions of the parts to be joined (1, 2) in which the joining gap (3) is open to the environment, with the exception of the surface regions on the side to be welded, the joining gap (3) is closed.

7. Method according to Claim 5 or 6**, characterized in that**, for closing the joining gap (3), at least one sealing means (5) which bridges the joining gap (3) is applied to the root-side surface (W) of the parts to be joined (1, 2), in particular if present also to the inlet-side and/or outlet-side surface (1a, 2a, 1b, 2b) of the parts to be joined (1, 2), the root-side surface (W) preferably being closed first.

8. Method according to Claim 7, **characterized in that**, as the at least one sealing means (5),
a**.** at least one weld seam (5) is arranged on the surfaces of the parts to be joined so as to bridge the gap, in particular by means of arc welding, preferably with feeding of a welding filler, and/or
b. a metal sheet strip (5) or a metal foil (5) is arranged on the surfaces of the parts to be joined so as to bridge the gap, in particular is adhesively bonded, soldered or welded to the surfaces, and/or
c. an adhesive tape (5) is arranged, in particular glued, on the surfaces of the parts to be joined so as to bridge the gap.

9. Method according to one of the preceding claims, **characterized in that** the joining gap (3) between the parts to be joined (1, 2) is formed by placing the parts to be joined (1, 2) against one another, wherein the distance between the opposite parts to be joined (1, 2) lies outside the tolerances of a technical zero gap, in particular the parts to be joined (1, 2) are arranged relative to one another in a square butt joint with edges/end faces which are not polished and which preferably have cutting roughness.

10. Method according to one of the preceding claims, **characterized in that** parts to be joined (1, 2) having a thickness greater than 10 mm, preferably greater than 20 mm, further preferably greater than 30 mm, further preferably greater than 40 mm, further preferably greater than 50 mm, are welded to one another, in particular in a single welding pass.

## Revendications

1. Procédé de soudage de deux pièces à assembler (1, 2) le long d'un interstice d'assemblage (3) agencé entre celles-ci, dans lequel, pour le soudage, un faisceau d'énergie (20) éclaire l'interstice d'assemblage (3) à travers une chambre mobile (6) à dépression, en particulier sur toute la profondeur de l'interstice d'assemblage (3), laquelle chambre est déplacée sur le côté à souder des pièces à assembler (1, 2) le long de l'interstice d'assemblage (3) et dans laquelle une dépression est produite, dans lequel
a. la chambre à dépression (6) éclairée par le faisceau d'énergie (20) forme une première chambre à dépression (6) dans laquelle, lors du soudage, une dépression est générée à un premier niveau de pression, et
b. une dépression à un deuxième niveau de pression est générée dans une deuxième chambre à dépression (13) adjacente à la première chambre à dépression (6), en particulier directement sur la paroi de chambre (6a) de celle-ci, de préférence en entourant au moins partiellement, de préférence complètement, la première chambre à dépression (6), et qui recouvre partiellement l'interstice de soudage (3) lors du soudage, et **caractérisé en ce que**
c. au moyen d'un système (23) de régulation de pression, les niveaux de pression dans les deux chambres à dépression (6, 13) sont égalisés, ou le premier niveau de pression est relevé au-dessus du deuxième niveau de pression.

2. Procédé selon la revendication 1, **caractérisé en ce que** la différence entre les niveaux de pression est maintenue à l'intérieur d'une plage de régulation prédéterminée, notamment entre 1 à 30 mbar, de préférence entre 10 à 20 mbar.

3. Procédé selon l'une des revendications précédentes, **caractérisé en ce que**, pour régler la position relative des niveaux de pression l'un par rapport à l'autre, le premier niveau de pression est modifié par des mesures de régulation techniques, de préférence par modification du débit volumique du gaz de protection amené dans la première chambre à dépression (6) et/ou par modification du débit volumique du gaz pompé hors de la première chambre à dépression (6), de préférence au moyen d'au moins une vanne réglable (12, 17), en particulier sans modification du train de pompe (15, 16) au moyen duquel la deuxième chambre à dépression (13) est mise en dépression.

4. Procédé selon l'une des revendications précédentes, **caractérisé en ce qu'**en fonction du premier et/ou du deuxième niveau de pression, les paramètres de soudage du faisceau d'énergie (20), notamment la puissance du faisceau, sont modifiés.

5. Procédé selon l'une des revendications précédentes, **caractérisé en ce qu'**avant le début du soudage des pièces à assembler (1, 2), l'interstice d'assemblage (3) est fermé sur la surface (W) côté racine des pièces à assembler (1, 2).

6. Procédé selon l'une des revendications précédentes, **caractérisé en ce que**, avant le début du soudage des pièces à assembler, l'interstice d'assemblage (3) est fermé dans toutes les zones de surface des pièces à assembler (1, 2) dans lesquelles l'interstice d'assemblage (3) est ouvert sur l'environnement, à l'exception des zones de surface du côté à souder.

7. Procédé selon la revendication 5 ou la revendication 6, **caractérisé en ce que**, pour fermer l'interstice d'assemblage (3), on applique sur la surface (W) côté racine des pièces à assembler (1, 2), en particulier, si elle existe, également sur la surface (1a, 2a, 1b, 2b) côté entrée et/ou sortie des pièces à assembler (1, 2), au moins un agent d'étanchéité (5) qui recouvre l'interstice d'assemblage (3), la surface (W) côté racine étant de préférence fermée en premier.

8. Procédé selon la revendication 7, **caractérisé en ce que**, en tant que ledit au moins un moyen d'étanchéité (5),
a. au moins un cordon de soudure (5) est agencé sur les surfaces des pièces à assembler de manière à combler les interstices, en particulier au moyen d'un soudage à l'arc, de préférence avec apport d'un métal d'apport, et/ou
b. une bande de tôle métallique (5) ou une feuille métallique (5) est disposée sur les surfaces des pièces à assembler de manière à combler les interstices, en particulier est collée, brasée ou soudée avec les surfaces, et/ou
c. une bande adhésive (5) est disposée, en particulier collée, sur les surfaces des pièces à assembler, de manière à combler les interstices.

9. Procédé selon l'une des revendications précédentes, **caractérisé en ce que** l'interstice d'assemblage (3) entre les pièces à assembler (1, 2) est formé en plaçant les pièces à assembler (1, 2) l'une contre l'autre, la distance entre les pièces à assembler (1, 2) placées l'une en face de l'autre se situant en dehors des tolérances d'un interstice technique nulle, les pièces à assembler (1, 2) étant en particulier disposées l'une par rapport à l'autre selon une jonction en I avec des arêtes/surfaces frontales non rectifiées, présentant de préférence une rugosité de coupe.

10. Procédé selon l'une des revendications précédentes, **caractérisé en ce que** des pièces à assembler (1, 2) d'une épaisseur supérieure à 10 mm, de préférence supérieure à 20 mm, de préférence supérieure à 30 mm, de préférence supérieure à 40 mm, de préférence supérieure à 50 mm sont soudés ensemble, en particulier en une seule passe de soudage.
